# EUROPEAN PATENT SPECIFICATION

(11) **EP 4 064 946 B1**
(45) Date of publication and mention of the grant of the patent: **07.06.2023**
(21) Application number: 20807036.7
(22) Date of filing: 19.11.2020
(51) Int. Cl.: A47J 36/24, A47J 36/32

(54) **BOTTLE WARMER**
FLASCHENWÄRMER
CHAUFFE-BIBERON

(30) Priority: 26.11.2019 EP 19211512
(43) Date of publication of application: 05.10.2022
(73) Proprietor: Koninklijke Philips N.V., 5656 AG Eindhoven (NL)
(72) Inventor: DUINEVELD, Paulus Cornelis, 5656 AE Eindhoven (NL)
(74) Representative: Philips Intellectual Property & Standards
(86) International application number: PCT/EP2020/082622
(87) International publication number: WO 2021/104977

(56) References cited:
- WO-A1-2016/146390
- US-A- 6 100 504
- US-A1- 2012 061 376
- US-A1- 2016 015 209

## Description

### FIELD OF THE INVENTION

This invention relates to bottle warmers, for example for warming milk for feeding to an infant.

### BACKGROUND OF THE INVENTION

Bottle warmers are used to quickly heat milk to a temperature within a preferred temperature range such as between 30 and 42 degrees (Celsius), and more preferably between 35 and 39 degrees. The document US 2016/015209 A1 discloses an example of a bottle warmer.

Some existing bottle warmers are for example based on the so-called "bain-marie" principle. According to this principle, the milk is heated by placing the milk bottle in water that is heated via a heating element at the bottom of the bottle warmer. One of the essential advantages of a bain-marie system is that the heating of the milk is relatively uniform, i.e. there is only a small temperature gradient in the milk.

In one example of commercially available bottle warmer of this type, the water bath temperature is controlled to be a constant, but user set, value between 70 and 92 degrees. This has the advantage that the heating up of the milk is very rapid, but the disadvantage that the milk can be overheated quickly when the milk is not taken out fast enough, as heating of the milk will continue until the milk has reached the water bath temperature.

Overheating of the milk is very annoying as it has the risk of scalding a baby, it takes time to cool back down, and valuable nutrition in breast milk can be damaged when the milk temperature becomes too high.

It is known to provide controls to prevent that the milk temperature becomes too high by controlling the water temperature. The disadvantage of this approach is that the heating up of the milk can be slow and it can therefore take a long time to heat up the milk.

It would be desirable to provide a signal or implement a timer to indicate when the milk is ready. This is however not straightforward as heating time of the bottle is a function of many parameters, such as the initial milk temperature, the milk volume and the water bath temperature. For example, it takes much longer to heat a full bottle at a fridge temperature compared to a half full bottle at room temperature. Thus, a timer for a single time duration is not appropriate as it will give too hot milk when it is based on the largest bottle from a fridge, or too cold when it based on the smallest bottle.

Users can be made aware of the expected heating times for different use cases and then they can set a suitable timer. However, this requires user input and also requires the user to set a timer or monitor the time carefully, which may not be easy while at the same time attending to the infant.

There is therefore a need for a simple and user-friendly way to determine and indicate when the bottle is warmed to the desired temperature, and without excessively slowing the heating process or complicating the user interaction with the bottle warmer.

### SUMMARY OF THE INVENTION

The invention is defined by the claims.

According to examples in accordance with an aspect of the invention, there is provided a bottle warmer, comprising:
a vessel for receiving a bottle to be warmed and for receiving water to surround and heat the bottle;
a heater for heating the water and thereby the bottle;
a thermostat for switching at a set temperature thereby for controlling the heater in dependence on the thermostat;
an adjustment element for displacement from a start position to a desired heating setting position, based at least on volume information in respect of the bottle contents,
wherein the adjustment element is coupled to the thermostat for setting the thermostat set temperature, wherein the bottle warmer further comprises:
   a mechanical timer having a timing value set by the position of the adjustment element; and
   an alarm for providing an output when the timing value has elapsed.

This bottle warmer provides an alarm when the bottle is ready, i.e. when the milk has reached the desired temperature range. A timer functionality is integrated into the the water temperature control by combining a mechanical timer with the existing adjustment element (e.g. an adjustment knob). In this way, the functionality remains simple for the user; they simply actuate the adjustment element to the desired heating setting, and a timer value is then set automatically in dependence on that setting.

The invention is based on the recognition that it is possible to correlate the heating time with the heating temperature such that both are controlled in unison to provide the required heating. The user is warned when the milk is ready and can take out the milk bottle at the right moment and can prevent that the milk is too hot or too cold without carefully having to monitor the time.

The sharing of components limits the additional cost to implement the timer function as well as making a simple user interface. This arrangement also ensures that the heating will start at the same time as the timer starts to count down.

The bottle warmer may be adapted to turn off the heater when the alarm output is provided. For example, the generation of the alarm may also operate a switch, which indicates that the heating time is complete. In this way, overheating is prevented. The user may of course heat for additional time if they wish the milk to be warmer.

The mechanical timer for example comprises a return mechanism for returning the adjustment element to the start position, and wherein the alarm is for providing an output when the adjustment element has returned to the start position. Thus, the timer is a mechanical count down timer, which has the initial time set by the position of the adjustment element.

In this case, there is preferably a mechanism for holding the thermostat setting at the initially set value, so that the thermostat setting does not evolve over time as the adjustment element returns to the start position.

The return mechanism for example comprises a mechanical spring system.

The thermostat for example comprises a bimetal switch. The position of the adjustment element sets a bias for the bimetal switch such that the switch triggers at a temperature which depends on the adjustment element position.

The alarm may comprise an audible output device (e.g. a bell or buzzer) and/or a visual output device (such as an LED output).

The bottle warmer preferably comprises a set of visual heating setting indicators along the adjustment element, wherein each heating setting indicator comprises an indication of a volume amount.

Thus, the user simply notes the volume of milk to be heated and displaces the adjustment element to the appropriate position, which sets the water temperature and the time.

The visual heating setting indicators may further comprise an indication of an initial milk temperature, such that the desired heating setting input is further based on initial temperature information in respect of the bottle contents. Thus, it can be ensured more accurately that the final milk temperature is within the desired temperature range for different initial milk temperatures (e.g. fridge temperature or room temperature).

The visual heating setting indicators may comprise a first scale for a first initial milk temperature and a second scale for a second initial milk temperature. Thus, instead of a single line of indicators, separate scales may be provided for room temperature and for fridge temperature, for example.

The visual heating setting indicators may further comprise an indication of a remaining heating time. Thus, for the example in which the adjustment element returns to the initial position, the adjustment element position functions as a count down timer.

There is for example a linear correspondence between the thermostat set temperature and the timing value. Thus, there may be a linear relationship between the adjustment element displacement amount and the temperature, and also a linear relationship between the adjustment element displacement and the timing value.

The adjustment element for example comprises a rotary adjustment element for rotation from the start position to the desired heating setting input. The displacement of the rotary adjustment element is then a rotation angle.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 is a perspective view of a known bottle warmer;
Figure 2 is a cut-away perspective view of the bottle warmer of Figure 1;
Figure 3 is a cross-sectional top view of the bottle warmer of Figure 1;
Figure 4 shows an example of the visual indicator;
Figure 5 shows a rotary adjustment element and the shaft which provides rotary control of the thermostat in accordance with one example of the invention;
Figure 6 shows a first plot of the relationship between the milk volume (x-axis) and the set time (right y-axis) and the water bath temperature (left y-axis);
Figure 7 shows a second plot of the relationship between the milk volume (x-axis) and the set time (right y-axis) and the water bath temperature (left y-axis).
Figure 8 shows a plot of the relationship between the milk volume (x-axis) and the end milk temperature for milk initially in the fridge and milk initially at room temperature.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the protection, which is defined by the appended claims. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a bottle warmer which uses heating of a water bath. An adjustment element, e.g. a control knob, is used to set both a thermostat set temperature for the control of the water bath as well as a timing value for a mechanical timer. An alarm is generated when the timing value has elapsed.

Before describing the invention, the design of a known bottle warmer will be explained, to which the invention may be applied.

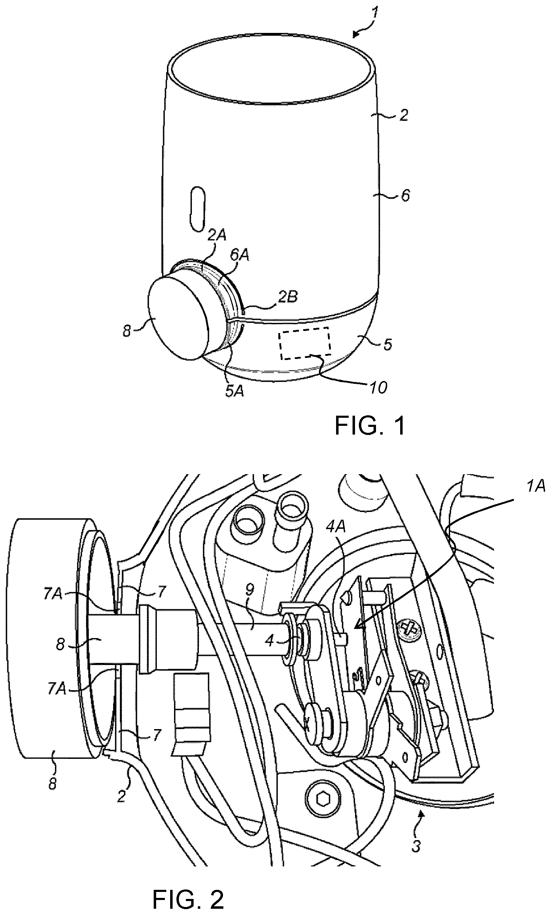

Referring to Figures 1 to 3, a known bottle warmer 1 is shown. The bottle warmer comprises a housing 2 and a thermostat 3. The housing defines a vessel for receiving a bottle to be warmed and for receiving water to surround and heat the bottle. The thermostat 3 is mounted inside the housing 2 and comprises a rotary input 4 that is rotatable to adjust the temperature of the bottle warmer 1. The bottle warmer has a heater 10 which is controlled using feedback from the thermostat 3.

The housing 2 of the bottle warmer 1 comprises a first housing portion 5 and a second housing portion 6. A first semi-circular wall portion 5A extends from the exterior surface of the first housing portion 5 and a second semi-circular wall portion 6A extends from the exterior surface of the second housing portion 6. The first housing portion 5 and the second housing portion 6 are joined together to form the housing 2 such that the first semicircular wall portion 5A and the second semi-circular wall portion 6A meet to form a circular wall portion 2A.

The first housing portion 5 comprises an internal wall 7 that has a semicircular shaped recess 7A. The second housing portion 6 comprises an internal wall (not shown) that has a semi-circular shaped recess (not shown) that aligns with the semi-circular shaped recess 7A of the internal wall 7 of the first housing portion 5 to form a circular aperture (not shown) when the first housing portion 5 and the second housing portion 6 are joined together.

The thermostat 3 comprises a control mechanism 1A that is actuated by the rotary adjustment element 8, by coupling to the rotary input 4 of the thermostat 3 by a shaft 9.

The thermostat 3 is mounted to the inside of the first housing portion 5 on a bracket (not shown) prior to the first housing portion 5 and the second housing portion 6 being joined together. The thermostat 3 comprises a base 3A with a holding plate 3B and a control plate 3C extending therefrom. A screw actuator 4A is rotatably mounted to the holding plate 3B and is urged against the control plate 3C to exert a bending force thereon. The amount of bending force exerted on the control plate 3C controls the temperature of the bottle warmer 1.

In particular, the thermostat comprises a bimetal strip 3D. Bending of the bimetal strip closes a pair of electrical contacts 3E and this provides a connection or an interrupt to the supply of power to the heater 10.

Thus, a low cost electromechanical heater control system is implemented.

The screw actuator 4A is coupled to the rotary input 4 so that when the rotary input 4 is rotated the screw actuator 4A also rotates and thus moves axially towards or away from the control plate 3C, depending on the direction of rotation of the rotary input 4, thereby altering the bending force exerted on the control plate 3C and thus the temperature of the bottle warmer 1. In general terms, the screw actuator 4A sets a bias to the thermostat.

Other arrangements for a rotary set thermostat are of course possible, and this is just one known example.

Therefore, the temperature of the bottle warmer 1 can be adjusted by rotation of the rotary adjustment element 8, which is rotatably coupled to the rotary input 4 by the shaft 9, with each angular position of the rotary adjustment element 8 relative to the housing 2 representing a different temperature of the bottle warmer 1. The relationship between the rotational position of the rotary adjustment element 8 relative to the housing 2 and the temperature of the bottle warmer 1 is graphically indicated to the user by the alignment of a notch (not shown) on the rotary adjustment element 8 with a visual indicator 2B provided on the housing 2 about the circular wall portion 2A.

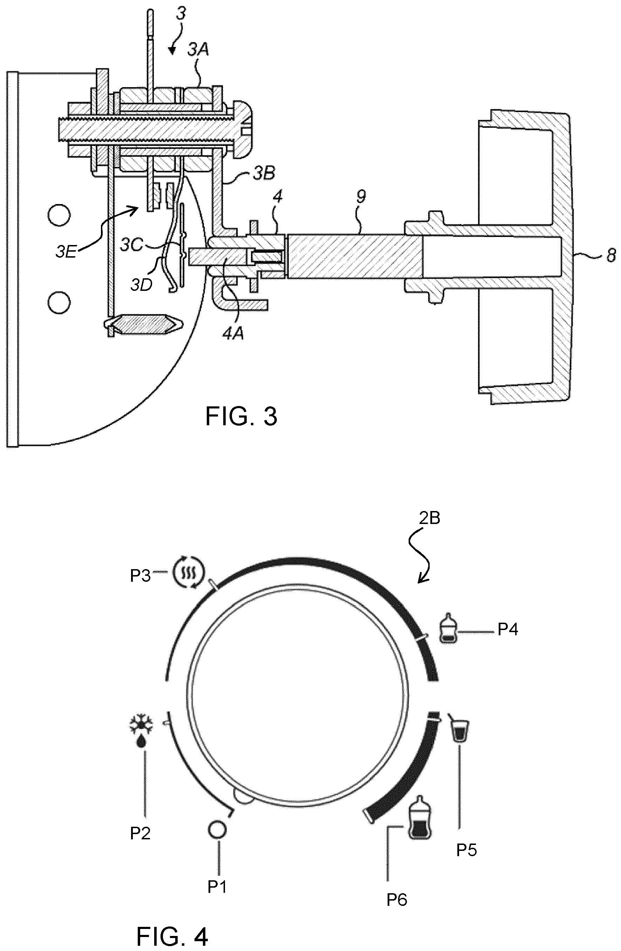

Figure 4 shows an example of the visual indicator 2B. It comprises a set of indicators starting at a start position P1, and providing a series of further set positions P2 to P6.

For example:
P1 is the start (off) position for no heating;
P2 is a defrost setting;
P3 is a keep warm setting;
P4 is for heating bottles less than half full (< 180 ml) and is for a water bath temperature 70 °C.
P5 is for food warming.
P6 is for bottles more than half full (> 180 ml) and is for a water bath temperature 92 °C.
P2 to P6 are desired heating setting positions.

The water bath temperature increases progressively from P1 to P6.

The required heating time however depends for example on the initial milk temperature, not only on the milk volume.

The invention is based on the recognition that a timing value may be set by the same rotary adjustment element (i.e. a rotary input knob or dial). Thus, longer times may be associated with higher water bath temperatures, and despite the resulting correlation between time and temperature (which thereby removes a degree of freedom in selecting the time duration), suitable settings are available for all desired combinations of milk volume and initial milk temperature.

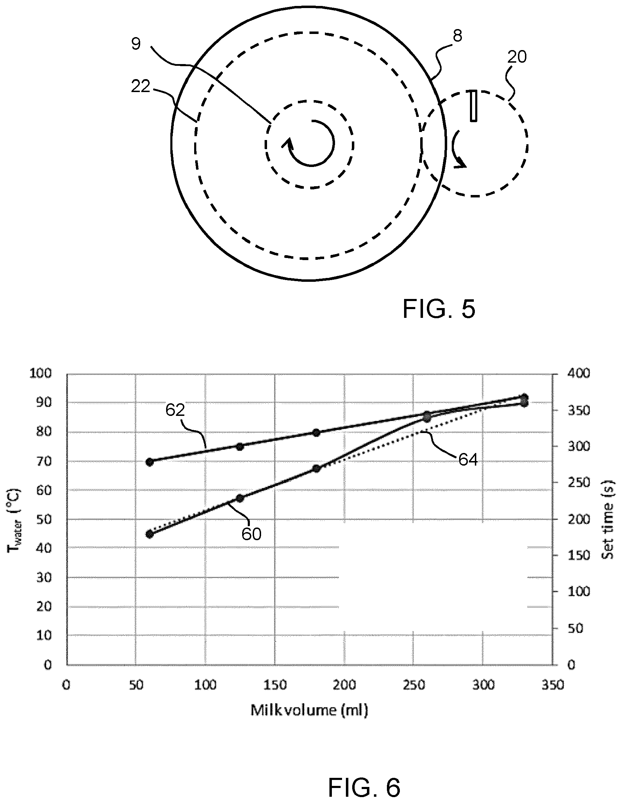

Figure 5 shows the rotary adjustment element 8 and the shaft 9 which provides rotary control of the thermostat.

A mechanical timer 20 is provided having a timing value set by the position of the rotary adjustment element 8. The rotary adjustment element for example has a cog 22 which drives the mechanical timer. An alarm provides an output when the timing value has elapsed. The mechanical timer thus counts down from the set timing value and then delivers an alarm. Mechanical timers are well known, such as egg timers. Typically, they operate with a mechanical spring system.

In one example, the mechanical timer rotates as it counts down the time, but this rotation is decoupled from the rotary adjustment element 8. A ratchet system may be used for this purpose, so that clockwise rotation of the rotary adjustment element advances the timer (anticlockwise in the example shown), but the return of the mechanical timer is decoupled from the rotary adjustment element 8, and the element 8 thus retains the set thermostat temperature.

In another example, the mechanical timer is directly driven by the rotary adjustment element 8 so the element itself rotates back (anticlockwise) as the timer counts down the time. In this case, the thermostat setting needs to be fixed. This may again be achieved by a ratchet system. Thus clockwise rotation of the rotary adjustment element is coupled to the thermostat, but the return rotation is decoupled from the thermostat, and the thermostat thus retains the set thermostat temperature. The thermostat will then be reset to its starting position when the timer reaches the end of the count down. For example, position P1 may be associated with a reset of the thermostat setting.

This bottle warmer provides an alarm when the bottle is ready, i.e. when the milk has reached the desired temperature range. The alarm may comprise an audible output device (e.g. a bell or buzzer) and/or a visual output device (such as an LED output). A timer functionality is integrated into the water temperature control by combining a mechanical timer with the existing rotary adjustment element. In this way, the functionality remains simple for the user; they simply rotate the rotary adjustment element to the desired heating setting, and a timer value is then set automatically in dependence on that setting.

The bottle warmer may turn off the heater when the alarm output is provided. For example, a heater off function may be associated with position P1. There may be a switch which is triggered by the rotary adjustment element when it reaches position P1.

The bottle warmer again has a visual indicator with a set of visual heating setting indicators around the rotary adjustment element, wherein each heating setting indicator comprises at least an indication of a volume amount.

For example, the indicators may represent different volumes:
60ml
125ml
180ml
260 ml
330ml

Thus, the user simply notes the volume of milk to be heated and rotates the rotary adjustment element to the appropriate position, which sets the water temperature and the time.

The visual heating setting indicators may further provide information about the water temperature which is thereby set (all degrees are Celsius):
60ml, 70 degrees
125ml, 75.3 degrees
180m1, 79.8 degrees
260ml, 86.3 degrees
330m1, 92 degrees

The visual heating setting indicators may further comprise an indication of an initial milk temperature, such that the desired heating setting input is further based on initial temperature information in respect of the bottle contents. Thus, it can be ensured more accurately that the final milk temperature is within the desired temperature range for different initial milk temperatures (e.g. fridge temperature or room temperature, F=fridge temperature, R=room temperature):
60m1, R
60m1, F
125ml, R
125ml, F
180ml, R
180ml, F
260ml, R
260ml, F
330ml, R
330ml, F

The visual heating setting indicators may comprise a first scale for a first initial milk temperature (e.g. room) and a second scale for a second initial milk temperature (e.g. fridge). Thus, instead of a ring of indicators as represented by the list above, separate scales may be provided for room temperature and for fridge temperature, for example. These may form two concentric rings around the rotary adjustment element. They may then overlap in a more intuitive way (e.g. 180ml at fridge temperature may be a higher temperature setting than 250ml at room temperature).

The visual heating setting indicators may further comprise an indication of a remaining heating time. Thus, for the example in which the rotary adjustment element returns to the initial position, the rotary adjustment element position functions as a count down timer:
60ml, 160s
125ml, 200s
180ml, 250s
260m1, 305 s
330m1, 345s

These various options may be combined in different ways.

In a most basic implementation, the visual heating setting indicators only indicate the volume, hence irrespective of the initial milk temperature. As there are different starting temperatures of the milk, there is still a difference in milk temperature at the end of the period. However, by selection of suitable timing and temperature settings, it may be possible to ensure the milk is within an acceptable final temperature range.

Table 1 shows a modelling of the time to heat milk to different prescribed end temperatures (32,34,37,40 degrees) and the required time, for different milk volumes and starting temperatures, and different bottles. A suitable set time is then shown.

**Table 1**

| Milk vol. | Bottle | T_{bath} | Tₘᵢₗₖ | Time 32°C | Time 34°C | **Time 37°C** | Time 40°C | Time set |
|---|---|---|---|---|---|---|---|---|
| 60 ml | 4 Oz | 70°C | 20°C | 126 s | 140 s | 162 s | 187 s | 180 s |
| 60 ml | 4 Oz | 70°C | 5°C | 169 s | 182 s | 202 s | 225 s | 180 s |
| 125 ml | 9 Oz | 75.3°C | 20°C | 163 s | 179 s | 205 s | 233 s | 230 s |
| 125 ml | 9 Oz | 75.3°C | 5`C | 218 s | 234 s | 258 s | 284 s | 230 s |
| 180 ml | 9 Oz | 79.8°C | 20°C | 210 s | 227 s | 254 s | 283 s | 280 s |
| 180 ml | 9 Oz | 79.8°C | 5°C | 263 s | 280 s | 305 s | 332 s | 280 s |
| 260 ml | 9 Oz | 86.3°C | 20°C | 264 s | 284 s | 312 s | 344 s | 340 s |
| 260 ml | 9 Oz | 86.3°C | 5°C | 325 s | 342 s | 370 s | 399 s | 340 s |
| 330 ml | 11 Oz | 92°C | 20°C | 275 s | 296 s | 328 s | 362 s | 360 s |
| 330 ml | 11 Oz | 92°C | 5°C | 350 s | 370 s | 400 s | 433 s | 360 s |

| | | | | | | | | |
|---|---|---|---|---|---|---|---|---|
| Note that 1Oz = 28.4ml. | | | | | | | | |

The model calculations show that for the main bottle types the temperature of the milk is, including all tolerances (e.g. bottle wall variations), between 32 and 40 °C when a single time setting is applied to a given milk volume. For example, for a 125ml volume, a 230 second time will result in just below 40 degrees for room temperature milk and just below 34 degrees for fridge temperature milk.

There are thus differences in optimal time when the milk is either at room temperature or at fridge temperature. Thus, the result is that for a fixed set time, milk at room temperature will generally reach 39 to 40 degrees, whereas milk starting at a fridge temperature will generally reach around 34 degrees.

Figure 6 shows a plot of the relationship between the milk volume (x-axis) and the set time (right y-axis) and the water bath temperature (left y-axis).

Plot 60 shows the set time and plot 62 shows the water bath temperature.

It can be seen that the time increases almost linearly with the milk volume as can be seen by plot 64. This enables implementation of a simple mechanical timer principle (which counts down at a constant rate).

When all tolerances of the bottle, especially the bottle wall thickness, are included, there is more variation. Table 2 gives temperature variation for the 95% population. Note that the variation in bottle wall thickness has been translated for simplicity to a variation in heating time.

**Table 2**

| Milk vol. | Bottle | T_{bath} | Tₘᵢₗₖ | Time set | Temp milk |
|---|---|---|---|---|---|
| 60 ml | 4 Oz | 70 °C | 20 °C | 215 s | 43 °C |
| 60 ml | 4 Oz | 70 °C | 5 °C | 145 s | 28 °C |
| 125 ml | 9 Oz | 75.3 °C | 20 °C | 260 s | 43 °C |
| 125 ml | 9 Oz | 75.3 °C | 5 °C | 200 s | 29 °C |
| 180 ml | 9 Oz | 79.8 °C | 20 °C | 310 s | 43 °C |
| 180 ml | 9 Oz | 79.8 °C | 5 °C | 250 s | 29 °C |
| 260 ml | 9 Oz | 86.3 °C | 20 °C | 370 s | 42 °C |
| 260 ml | 9 Oz | 86.3 °C | 5 °C | 310 s | 30 °C |
| 330 ml | 11 Oz | 92 °C | 20 °C | 390 s | 42 °C |
| 330 ml | 11 Oz | 92 °C | 5 °C | 330 s | 30 °C |

In Table 1, the results relates to a bottle where all important parameters influencing the temperature are exactly according the mean.

However, a standard deviation in the time to reach 37 degrees is typically around 17 seconds for a 4 Oz bottle and 13 to 15 seconds for a 9 to 11 Oz bottle. This is due to the fact that the spread in wall thickness is larger for a 4 Oz bottle. In order to have 95% of the population meet the requirement we can have a spread of 2 standard deviations. Hence, a timing spread of 26 to 34 seconds is acceptable.

The influence of these tolerances can calculated in a simple way. For example, taking a 60 ml 4 Oz bottle, Table 1 sows that the set time is 180 s for this case. The mean case of a starting milk temperature of 20 degrees will reach a temperature close to 39 degrees (37 degrees takes 162 s and 40 degrees takes 187 s), while the starting milk temperature of 5 degrees will reach a temperature close to 34 degrees (34 degrees takes 182 s).

The standard deviation of the time to reach 37 degrees is around 17 s for this case, hence 95% of the population will have a time which is within ± 35 s.

The effect of the tolerances is reflected in a range of heating times 145 to 215 s for the set time of 180 s. For a 20 degree milk temperature the risk is a too warm bottle, hence for this case the maximum temperature is calculated in Table 2 for a heating time of the mean of 215 s, resulting in a milk temperature of 43 degrees. Physically this case is reflected in a bottle with a thin wall, more heating power etc.

Note that a heating time of 145 s for this case (i.e. thick wall bottles, less heating power) will not give a problem as the temperature will be in the range of the acceptable temperatures.

For a milk starting at fridge temperature, the risk is now a too cold bottle. Therefore the lowest final milk temperature for a heating time of the mean of 145 s has been calculated, resulting in a final milk temperature of 28 °C.

Thus, Table 2 may be considered to represent the worst case scenario within the 2 standard deviation range. The final temperature range is now 28 to 43 degrees.

This shows that preferably there is a separation between room temperature and fridge temperature milk. This explains why the visual indicators preferably represent different volumes as well as starting temperatures, such as in some of the examples above.

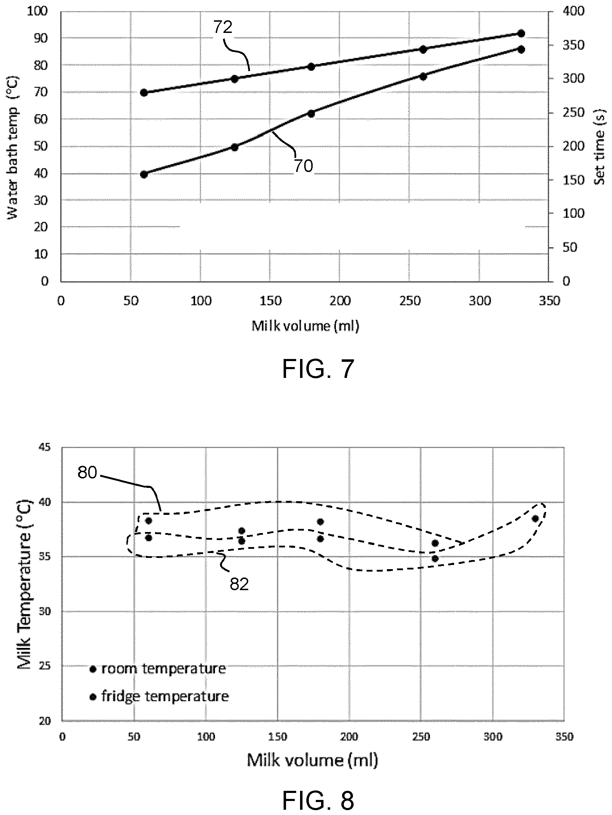

There is still a very linear relation between milk volume, water bath temperature and required time for the timer as shown in Figure 7.

Figure 7 shows a plot of the relationship between the milk volume (x-axis) and the set time (right y-axis) and the water bath temperature (left y-axis). These are for room temperature milk.

Plot 70 shows the set time and plot 72 shows the water bath temperature.

In Figure 6, the set times and water bath temperatures as a function of the milk volumes in the bottle are given as used in Table 1. Here an approximately linear relation is seen both for the set time as well as for the water bath temperature.

In Figure 7, the aim is to find a temperature of the milk for both the average fridge temperature as well as the average room temperature, close to 37 degrees. The temperature for 95% of the population is then in an acceptable range of 34 to 40 degrees.

Figure 7 gives the required settings for the average case starting at room temperature. A linear relation for both the water bath temperature and the set time can be seen.

Figure 8 shows end temperatures for both the initial room temperature (the plots in region 82) as well as fridge temperature (the plots in region 80).

As the mean for both cases is now close to 37 degrees, tolerances may in this way be handled in a better way.

The largest difference in temperatures will be for the 330 ml milk volume at room temperature and 260 ml at fridge temperature (both require a set time of 345 s). This could be improved by taking a slightly lower milk volume so increasing the milk temperature, with the drawback that the user interface may be slightly more complicated.

The set time is designed such that the warning signal is given when the milk temperature of the average case is close to 37 degrees. It may be beneficial to take a slightly smaller time as it will take some time between the warning signal and the moment the milk is taken out. Typically the temperature increase is around 1 degree per 10 seconds when the milk temperature is close to 37 degrees.

By providing different inputs for different initial milk temperatures, the bottle tolerances can thus be accommodated as explained above. Calculation of the influence of bottle wall tolerances results in 95% of the modelled situations obtaining a milk temperature between 32 and 40 degrees.

The adjustment element in the example above comprises a rotary adjustment element for rotation from the start position to the desired heating setting input. It is then a rotary control knob.

However, other adjustment elements may be used, such as a slider or lever. The slider or lever then controls the thermostat setting as well as setting a time value for a count down timer, in the same way as explained above.

Any reference signs in the claims should not be construed as limiting the scope.

## Claims

1. A bottle warmer, comprising:
a vessel (2) for receiving a bottle to be warmed and for receiving water to surround and heat the bottle;
a heater (10) for heating the water and thereby the bottle;
a thermostat (3) for switching at a set temperature thereby for controlling the heater in dependence on the thermostat;
an adjustment element (8) for displacement from a start position to a desired heating setting input, based at least on volume information in respect of the bottle contents,
wherein the adjustment element is coupled to the thermostat for setting the thermostat set temperature, wherein the bottle warmer further comprises:
a mechanical timer (20) having a timing value set by the position of the adjustment element; and
an alarm for providing an output when the timing value has elapsed.

2. A bottle warmer as claimed in claim 1, adapted to turn off the heater (10) when the alarm output is provided.

3. A bottle warmer as claimed in claim 1 or 2, wherein the mechanical timer (20) comprises a return mechanism for returning the adjustment element (8) to the start position, and
wherein the alarm is for providing an output when the adjustment element has returned to the start position.

4. A bottle warmer as claimed in claim 3, wherein the return mechanism comprises a mechanical spring system.

5. A bottle warmer as claimed in any one of claims 1 to 4, wherein the thermostat (3) comprises a bimetal switch.

6. A bottle warmer as claimed in any one of claims 1 to 5, wherein the alarm comprises:
an audible output device; and/or
a visual output device.

7. A bottle warmer as claimed in any one of claims 1 to 6, comprising a set of visual heating setting indicators along the adjustment element, wherein each heating setting indicator comprises an indication of a volume amount.

8. A bottle warmer as claimed in claim 7, wherein the visual heating setting indicators further comprise an indication of an initial milk temperature, such that the desired heating setting input is further based on initial temperature information in respect of the bottle contents.

9. A bottle warmer as claimed in claim 7 or 8, wherein the visual heating setting indicators comprise a first scale for a first initial milk temperature and a second scale for a second initial milk temperature.

10. A bottle warmer as claimed in any one of claims 7 to 9, wherein the visual heating setting indicators further comprise an indication of a remaining heating time.

11. A bottle warmer as claimed in any one of claims 1 to 10, wherein there is a linear correspondence between the thermostat set temperature and the timing value.

12. A bottle warmer as claimed in any preceding claim, wherein the adjustment element comprises a rotary adjustment element (8) for rotation from the start position to the desired heating setting input.

## Patentansprüche

1. Fläschchenwärmer, umfassend:
ein Gefäß (2) zum Aufnehmen eines Fläschchens, das aufgewärmt werden soll, und zum Aufnehmen von Wasser, um das Fläschchen zu umgeben und zu erwärmen;
ein Heizgerät (10) zum Erwärmen des Wassers und damit des Fläschchens;
einen Thermostat (3) zum Schalten bei einer eingestellten Temperatur und damit zum Steuern des Heizgeräts abhängig von dem Thermostat;
ein Einstellelement (8) zum Verstellen von einer Startposition zu einer gewünschten Heizeinstellungseingabe, basierend mindestens auf Volumeninformationen in Bezug auf den Fläschcheninhalt, wobei das Einstellelement mit dem Thermostat gekoppelt ist, um die
Thermostat-Vorgabetemperatur einzustellen, wobei der Fläschchenwärmer ferner Folgendes umfasst:
einen mechanischen Zeitgeber (20), der einen Zeitwert aufweist, der durch die Position des Einstellelements eingestellt wird; und einen Alarm zum Bereitstellen eines Ausgangs, wenn der Zeitwert verstrichen ist.

2. Fläschchenwärmer nach Anspruch 1, der angepasst ist, um das Heizgerät (10) auszuschalten, wenn
der Alarmausgang bereitgestellt ist.

3. Fläschchenwärmer nach Anspruch 1 oder 2, wobei der mechanische Zeitgeber (20) einen Rückstellmechanismus umfasst, um das Einstellelements (8) auf die Startposition zurückzustellen, und
wobei der Alarm dazu dient, einen Ausgang bereitzustellen, wenn das Einstellelement auf die Startposition zurückgestellt wurde.

4. Fläschchenwärmer nach Anspruch 3, wobei der Rückstellmechanismus ein mechanisches Federsystem umfasst.

5. Fläschchenwärmer nach einem der Ansprüche 1 bis 4, wobei der Thermostat (3) einen Bimetallschalter umfasst.

6. Fläschchenwärmer nach einem der Ansprüche 1 bis 5, wobei der Alarm Folgendes umfasst:
eine akustische Ausgabevorrichtung; und/oder
eine visuelle Ausgabevorrichtung.

7. Fläschchenwärmer nach einem der Ansprüche 1 bis 6, umfassend eine Reihe von visuellen Heizeinstellungsindikatoren entlang des Einstellelements, wobei jede Heizeinstellungsanzeige eine Angabe einer Volumenmenge umfasst.

8. Fläschchenwärmer nach Anspruch 7, wobei die visuellen Heizeinstellungsindikatoren
ferner eine Angabe einer anfänglichen Milchtemperatur umfassen, sodass die gewünschte Heizeinstellungseingabe ferner auf den anfänglichen Temperaturinformationen in Bezug auf den Fläschcheninhalt basiert.

9. Fläschchenwärmer nach Anspruch 7 oder 8, wobei
die visuellen Heizeinstellungsindikatoren eine erste Skala für eine erste anfängliche Milchtemperatur und eine zweite Skala für eine
zweite anfängliche Milchtemperatur umfassen.

10. Fläschchenwärmer nach einem der Ansprüche 7 bis 9, wobei die visuellen Heizeinstellungsindikatoren ferner eine Angabe der verbleibenden Heizzeit umfassen.

11. Fläschchenwärmer nach einem der Ansprüche 1 bis 10, wobei es zwischen der Thermostat-Vorgabetemperatur und dem Zeitwert einen linearen Zusammenhang gibt.

12. Fläschchenwärmer nach einem vorherigen Ansprüche, wobei das Einstellelement ein drehbares Einstellelement (8) zum Drehen aus der Startposition auf die gewünschte Heizeinstellungseingabe umfasst.

## Revendications

1. Un chauffe-biberon, comprenant:
un récipient (2) pour recevoir un biberon devant être chauffé et pour recevoir de l'eau pour
entourer et chauffer le biberon;
un appareil de chauffage (10) pour chauffer l'eau et le biberon;
un thermostat (3) pour la commutation à une température réglée pour ainsi contrôler l'appareil de chauffage en fonction du thermostat;
un élément de réglage (8) pour le déplacement à partir d'une position de départ vers une entrée de réglage de chauffage souhaitée, fondée sur au moins un volume d'informations en fonction des contenus du biberon, où l'élément de réglage est couplé au thermostat pour le réglage de la température du thermostat, où le chauffe-biberon comprend également:
une minuterie mécanique (20) possédant une valeur de temps établie pour la position de l'élément de réglage; et
une alarme pour fournir une sortie lorsque la valeur de temps s'est écoulée.

2. Un chauffe-biberon comme revendiqué selon la revendication 1, adapté pour allumer l'appareil de chauffage (10) lorsque la sortie d'alarme est fournie.

3. Un chauffe-biberon comme revendiqué selon la revendication 1 ou 2, où la minuterie mécanique (20) comprend un mécanisme de retour pour le retour de l'élément de réglage (8) vers la position de départ, et où l'alarme est prévue pour fournir une sortie lorsque l'élément de réglage est revenu à la position de départ.

4. Un chauffe-biberon comme revendiqué dans la revendication 3, où le mécanisme de retour comprend un système de ressort mécanique.

5. Un chauffe-biberon comme revendiqué selon l'une des revendications 1 à 4, où le thermostat (3) comprend un interrupteur bimétallique.

6. Un chauffe-biberon comme revendiqué selon l'une des revendications 1 à 5, où l'alarme comprend:
un dispositif de sortie audible; et/ou
un dispositif de sortie visuelle.

7. Un chauffe-biberon comme revendiqué selon l'une des revendications 1 à 6, comprend un ensemble d'indicateurs visuels de réglage du chauffage le long d'un élément de réglage, où chaque indicateur de réglage de chauffage comprend une indication d'une quantité de volume.

8. Un chauffe-biberon comme revendiqué selon la revendication 7, où les indicateurs visuels de réglage du chauffage comprennent une indication de la température initiale du lait de sorte que l'entrée du réglage de chauffage souhaité est également fondée sur l'information de la température initiale en fonction des contenus des biberons.

9. Un chauffe-biberon comme revendiqué dans la revendication 7 ou 8, où les indicateurs visuels de réglage du chauffage comprennent une première balance pour la première température initiale du lait et une seconde balance pour la seconde température initiale du lait.

10. Un chauffe-biberon comme revendiqué selon l'une quelconque des revendications 7 à 9, où les indicateurs visuels de réglage du chauffage comprennent une indication d'un temps de chauffage restant.

11. Un chauffe-biberon comme revendiqué selon l'une quelconque des revendications 1 à 10, où il y a une correspondance linéaire entre la température réglée par le thermostat et la valeur de temps.

12. Un chauffe-biberon comme revendiqué selon l'une quelconque des revendications précédentes, où l'élément d'ajustement comprend un élément de réglage rotatif (8) pour la rotation à partir de la position de départ vers une entrée de réglage de température souhaité.
